# EUROPEAN PATENT APPLICATION

(11) **EP 4 656 685 A1**
(43) Date of publication of application: **03.12.2025**
(21) Application number: 23918634.9
(22) Date of filing: 21.12.2023
(51) Int. Cl.: C08L 83/07, C08G 59/30, C08K 3/04, C08L 83/06

(54) **CONDUCTIVE SILICONE RUBBER COMPOSITION AND CURED PRODUCT THEREOF**

(30) Priority: 26.01.2023 JP 2023010357
(71) Applicant: SHIN-ETSU CHEMICAL CO., LTD., Tokyo 1000005 (JP)
(72) Inventor: HIRABAYASHI, Satao, Annaka-shi Gunma 379-0224 (JP); TSUCHIDA, Kazuhiro, Annaka-shi Gunma 379-0224 (JP); KIMURA, Tsuneo, Annaka-shi Gunma 379-0224 (JP); MINAMIKAWA, Tomoya, Annaka-shi Gunma 379-0224 (JP)
(74) Representative: Ter Meer Steinmeister & Partner
(86) International application number: PCT/JP2023/045849
(87) International publication number: WO 2024/157680

(57) **Abstract**

Provided is a conductive silicone rubber composition comprising:
(A) an organopolysiloxane containing, within one molecule, two or more alkenyl groups each binding to a silicon atom;
(B) conductive carbon black;
(C) 3-glycidyloxypropylsilanol oligomer represented by formula (1) 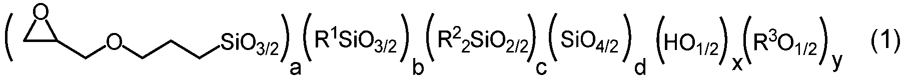 (in the formula, R¹ is a monovalent hydrocarbon group that has 1-10 carbon atoms, R² is a monovalent hydrocarbon group that may be substituted with a glycidyloxy group and has 1-10 carbon atoms, R³ is a monovalent aliphatic hydrocarbon group that has 1-10 carbon atoms; a, b, c, and d are numbers satisfying a ≥ 0.5, b ≥ 0, c ≥ 0, d ≥ 0, and a+b+c+d = 1, and x and y are numbers satisfying x ≥ 1.0 and y <_ 0.5); and
(D) a curing agent.

## Description

### TECHNICAL FIELD

The present invention relates to an electrically conductive silicone rubber composition. More specifically, the invention relates to an electrically conductive silicone rubber composition which, owing to the addition of a reactive epoxy group-containing silanol oligomer, has an excellent rubber compound processability and is able to give a cured product of improved rebound resilience and compression set. The invention also relates to the cured product of such a conductive silicone rubber composition.

### BACKGROUND ART

Conductive silicone rubber compositions are compositions in which carbon black or the like has been added to a silicone polymer in order to have the cured silicone rubber manifest electrical conductivity.

However, in general, the addition of carbon black, owing to its effects as a filler, worsens the rebound resilience and compression set of silicone rubber.

To ameliorate this, Patent Document 1 discloses, as a method for dispersing carbon black in a silicone polymer, a method that adds, for example, an amidoamine salt of a high-molecular-weight polyester acid.

Patent Document 2 discloses a method for improving the dispersibility of carbon black by adding, for example, a (meth)acrylate/silicone copolymer to a carbon black-containing coating.

Patent Document 3 discloses a method which adds, as a silica dispersing agent, a silanol group-containing silicone oil or a hydrolyzable silyl group-containing silane coupling agent to a silicone rubber composition. This reportedly controls the reactivity of silanol groups on silica surfaces, enabling the creep hardening properties and shelf stability of the composition, and also the compression set of the cured product, to be improved.

Patent Document 4 discloses a method which adds a hydroxyl group and epoxy group-containing polyether-modified silicone oil to a conductive silicone rubber composition. The added polyether component reportedly controls the electrostatic charge and the charge dissipation rate, enabling these to be speeded up.

As described above, there are examples in the art of silicone rubber compositions in which a silane coupling agent or a silanol group-containing silicone oil has been added, as a silica or carbon black-dispersing agent, to a reinforcing silica or carbon black-containing conductive silicone rubber composition, and a polyether-modified silicone oil is used to control charge dissipation.

However, no art that is able to increase the rebound resistance and improve the compression set of cured conductive silicone rubber compositions has been disclosed.

Moreover, when a rubber compound obtained by adding a conductive carbon to a silicone polymer is subjected to intensive kneading (shearing) or prolonged storage lasting a half-year or more, the silicone polymer chain sometimes cleaves. When such a phenomenon occurs, tackiness arises in the rubber compound and the processability decreases. No art capable of ameliorating these problems has hitherto been proposed.

### PRIOR ART DOCUMENTS

### PATENT DOCUMENTS

Patent Document 1: JP-A 2000-039755
Patent Document 2: JP-A 2014-125598
Patent Document 3: JP-A H07-133433
Patent Document 4: JP-A 2019-008059

### SUMMARY OF INVENTION

### TECHNICAL PROBLEM

The present invention was arrived at in light of the above circumstances. An object of the invention is to provide a conductive silicone rubber composition which has a good processability and gives a cured product of improved rebound resilience and compression set. Another object is to provide such a cured product.

### SOLUTION TO PROBLEM

The inventors have conducted intensive investigations aimed at achieving the above objects. As a result, they have discovered that by adding a 3-glycidyloxypropylsilanol oligomer to a conductive silicone rubber composition, the processability can be improved and it is also possible to improve the rebound resilience and compression set of the cured product. This discovery ultimately led to the present invention.

Accordingly, the invention provides:
1. A conductive silicone rubber composition which includes:
   (A) 100 parts by weight of an organopolysiloxane having two or more silicon-bonded alkenyl groups per molecule,
   (B) 0.5 to 40 parts by weight of conductive carbon black,
   (C) 0.01 to 10 parts by weight of a 3-glycidyloxypropylsilanol oligomer of formula (1) below 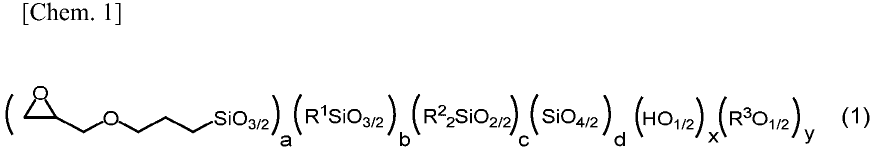 (wherein R¹ is a monovalent hydrocarbon group of 1 to 10 carbon atoms; each R² is independently a monovalent hydrocarbon group of 1 to 10 carbon atoms which may be substituted with a glycidyloxy group; R³ is a monovalent aliphatic hydrocarbon group of 1 to 10 carbon atoms; a, b, c and d are numbers which satisfy the conditions a ≥ 0.5, b ≥ 0, c ≥ 0, d ≥ 0 and a+b+c+d = 1; and x and y are numbers which satisfy the conditions x ≥ 1.0 and y ≤ 0.5), and
   (D) an effective curing amount of a curing agent.
2. The conductive silicone rubber composition of 1 above, wherein component (C) has a weight-average molecular weight of from 500 to 10,000.
3. The conductive silicone rubber composition of 1 or 2 above, wherein b, c and d in formula (1) are numbers which satisfy the conditions b = 0, 0 ≤ c ≤ 0.5 and 0 ≤ d ≤ 0.2.
4. A cured product of the conductive silicone rubber composition according to any of 1 to 3 above.

### ADVANTAGEOUS EFFECTS OF INVENTION

The 3-glycidyloxypropylsilanol oligomer-containing conductive silicone rubber composition of the invention has a good processability and is able to give a cured conductive silicone rubber of improved rebound resilience and compression set.

### BRIEF DESCRIPTION OF DRAWINGS

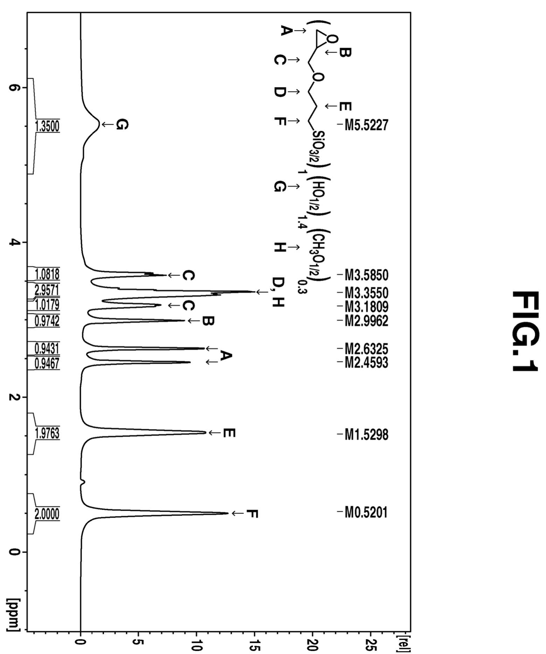

[FIG. 1] FIG. 1 is an ¹H-NMR spectrum of the 3-glycidyloxypropylsilanol oligomer obtained in Synthesis Example 1.

### DESCRIPTION OF EMBODIMENTS

The invention is described more fully below.

The conductive silicone rubber composition of the invention includes components (A) to (D) below:
(A) an organopolysiloxane having two or more silicon-bonded alkenyl groups per molecule,
(B) conductive carbon black,
(C) a 3-glycidyloxypropylsilanol oligomer of formula (1) below 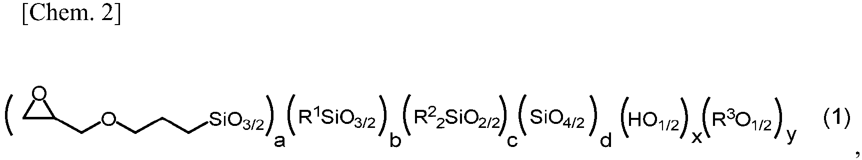 and
(D) a curing agent.

### -- Component (A) --

In this invention, component (A) is an organopolysiloxane having two or more silicon-bonded alkenyl groups per molecule.

The alkenyl groups are preferably ones having from 2 to 8 carbon atoms, and more preferably ones having from 2 to 6 carbon atoms. Specific examples include vinyl, allyl, butenyl, pentenyl, hexenyl and cyclohexenyl groups. Of these, vinyl groups are preferred.

Substituents other than silicon-bonded alkenyl groups are exemplified by, without particular limitation, monovalent hydrocarbon groups of 1 to 12 carbon atoms, preferably 1 to 8 carbon atoms. The monovalent hydrocarbon groups may be linear, branched or cyclic. Specific examples include alkyl groups such as methyl, ethyl, propyl, butyl, hexyl and octyl groups; cycloalkyl groups such as cyclopentyl and cyclohexyl groups; aryl groups such as phenyl and tolyl groups; and aralkyl groups such as benzyl and 2-phenylethyl groups.

Use can also be made of halogen-substituted monovalent hydrocarbon groups in which some or all of the hydrogen atoms on the foregoing monovalent hydrocarbon groups are substituted with halogen atoms such as chlorine, fluorine or bromine atoms, including fluoromethyl and other fluoroalkyl groups, and bromoethyl, chloromethyl, 3-chloropropyl, and 3,3,3-trifluoropropyl groups.

Of these, methyl and phenyl groups are preferred. Methyl groups are more preferred.

Above component (A) has two or more alkenyl groups, preferably from 2 to 50 alkenyl groups, and more preferably from 2 to 20 alkenyl groups, per molecule. Of these, one having vinyl groups is especially preferred. In this case, it is preferable for 0.01 to 20 mol%, especially 0.02 to 10 mol%, of all siloxane units on the organopolysiloxane to be siloxane units having an alkenyl group. The alkenyl groups may be bonded to silicon atoms at the ends of the molecular chain, may be bonded to silicon atoms partway along the molecular chain (non-terminal portions of the molecular chain) or may be bonded to both, although it is preferable for the alkenyl groups to be bonded to at least the silicon atoms at the ends of the molecular chain.

Preferably at least 80 mol% of all siloxane units on the organopolysiloxane, more preferably at least 90 mol%, even more preferably at least 95 mol%, and still more preferably all siloxane units other than alkenyl group-containing siloxane units, are preferably dialkylsiloxy groups, and more preferably dimethylsiloxy groups.

It is preferable for the molecular structure of the organopolysiloxane serving as component (A) to be linear or to be linear with a partially branched structure. Specifically, the repeating structure of the diorganosiloxane units making up the backbone of the organopolysiloxane is preferably one consisting solely of repeating dimethylsiloxane units or one in which diorganosiloxane units such as diphenylsiloxane units, methylphenylsiloxane units, methylvinylsiloxane units or methyl-3,3,3-trifluoropropylsiloxane units have been introduced as a portion thereof.

Both ends of the molecular chain are preferably capped with groups selected from, for example, trimethylsiloxy, dimethylphenylsiloxy, vinyldimethylsiloxy, divinylmethylsiloxy, trivinylsiloxy and methylphenylvinylsiloxy groups, and are more preferably capped with vinyldimethylsiloxy groups.

Specific examples of the organopolysiloxane of component (A) include dimethylpolysiloxanes capped at both ends of the molecular chain with dimethylvinylsiloxy groups, dimethylpolysiloxanes capped at both ends of the molecular chain with methylphenylvinylsiloxy groups, dimethylsiloxane/methylphenylsiloxane copolymers capped at both ends of the molecular chain with dimethylvinylsiloxy groups, dimethylsiloxane/methylvinylsiloxane copolymers capped at both ends of the molecular chain with dimethylvinylsiloxy groups and dimethylsiloxane/methylvinylsiloxane copolymers capped at both ends of the molecular chain with trimethylsiloxy groups.

Such organopolysiloxanes can be obtained by the (co)hydrolytic condensation of one, two or more organohalogenosilanes or by the ring-opening polymerization of a cyclic polysiloxane (siloxane trimer, tetramer, etc.) using an alkaline or acidic catalyst.

The above organopolysiloxane has an average degree of polymerization that is preferably from 100 to 100,000, more preferably from 1,000 to 50,000, even more preferably from 2,500 to 30,000, and still more preferably from 3,000 to 20,000.

The preferred state of this organopolysiloxane is a crude rubbery (non-liquid) state without self-flowing properties at room temperature (25°C). When the average degree of polymerization is too small, carbon black dispersion may be difficult.

The average degree of polymerization of this component (A) is determined as the weight-average degree of polymerization computed from the weight-average molecular weight calculated relative to polystyrene of a known molecular weight as the reference material by gel permeation chromatography (GPC) carried out under the following conditions.

### [Measurement Conditions]

| | |
|---|---|
| Apparatus: | HLC-8320 GPC, from Tosoh Corporation |
| Developing solvent: | tetrahydrofuran (THF) |
| Flow rate: | 0.6 mL/min |
| Detector: | differential refractive index detector (RI) |
| Columns: | TSK Guardcolumn SuperH-H |
| | TSKgel SuperH4000 (one 6.0 mm I.D. × 15 cm column) |
| | TSKgel SuperH3000 (one 6.0 mm I.D. × 15 cm column) |
| | TSKgel SuperH2000 (one 6.0 mm I.D. × 15 cm column) |
| | (all products of Tosoh Corporation) |
| Column temperature: | 40°C |
| Amount of sample injected: | 50 µL (2.0 wt% concentration THF solution) |
| Reference: | monodisperse polystyrene |

Component (A) may be of one type used alone, or may be a mixture of two, three or more types of differing molecular weight (degree of polymerization) or molecular structure.

### -- Component (B) --

The conductive carbon black used as component (B) is an additive for imparting electrical conductivity to the silicone rubber composition.

The conductive carbon black is not particularly limited. Generally, one that is commonly employed in conductive rubber compositions may be used. Examples include acetylene black, conductive furnace black (CF), super-conductive furnace black (SCF), extra-conductive furnace black (XCF), conductive channel black (CC), furnace black or channel black that has been heat-treated at an elevated temperature of about 1,500°C, carbon fibers, carbon nanotubes and fullarenes.

Specific examples include acetylene blacks such as Denka Acetylene Black (from Denka Co., Ltd.) and Shawinigan Acetylene Black (Shawinigan Chemicals, Ltd.), conductive furnace blacks such as Continex CF (Continental Carbon Co.) and Vulcan C (Cabot Corporation), super-conductive furnace blacks such as Continex SCF (Continental Carbon Co.) and Vulcan SC (Cabot Corporation), extra-conductive furnace blacks such as Asahi HS-500 (Asahi Carbon Co., Ltd.) and Vulcan XC-72 (Cabot Corporation), and conductive channel blacks such as Corax L (Degussa AG). Use can also be made of Ketjen Black EC and Ketjen Black EC-600JD, which are furnace blacks from Ketjen Black International Co.

Of these, acetylene black and furnace black are very suitable for use in this invention, and acetylene black is especially preferred.

These conductive carbon blacks may be of one type used alone, or two or more types may be used together.

The amount of component (B) included per 100 parts by weight of component (A) is from 0.5 to 40 parts by weight, preferably from 2 to 30 parts by weight, and more preferably from 8 to 20 parts by weight. When the amount added is less than 0.5 part by weight, the desired electrical conductivity cannot be obtained in the resulting silicone rubber. When it exceeds 40 parts by weight, blending with component (A) is difficult, leading to a pronounced decline in rubber strength, such as declines in the strength and the elongation at break, of the resulting silicone rubber.

### -- Component (C) --

In the present invention, a 3-glycidyloxypropylsilanol oligomer of formula (1) below is used as component (C). This is an essential component which, by interacting or reacting with carboxyl groups and phenolic hydroxyl groups on the surface of the carbon black serving as component (B) and thereby surface-modifying the carbon black, serves as an additive for suppressing surface interactions by excessive van der Waals forces and the like with component (A) and hydrogen bonding with carbon-bonded hydroxyl groups, thus increasing the rebound resilience and improving the compression set of the silicone rubber.

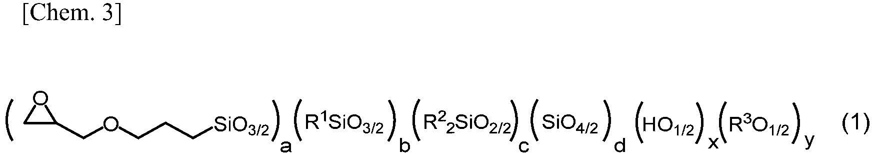

In this formula, R¹ is a monovalent hydrocarbon group of 1 to 10 carbon atoms, preferably a monovalent hydrocarbon group of 1 to 6 carbon atoms. The monovalent hydrocarbon group represented by R¹ may be linear, branched or cyclic. Specific examples include alkyl groups such as methyl, ethyl, propyl, butyl, pentyl, hexyl, heptyl, octyl and decyl groups; cycloalkyl groups such as cyclopentyl and cyclohexyl groups; alkenyl groups such as vinyl and allyl groups; and aryl groups such as phenyl and naphthyl groups. Of these, methyl, ethyl, propyl and phenyl groups are preferred; methyl and ethyl groups are more preferred; and methyl groups are even more preferred.

Each R² is independently a monovalent hydrocarbon group of 1 to 10 carbon atoms, preferably a monovalent hydrocarbon group of 1 to 6 carbon atoms, which may be substituted with a glycidyloxy group. The monovalent hydrocarbon group represented by R² may be linear, branched or cyclic. Specific examples include the same groups as those mentioned above for R¹, and glycidyloxy group-substituted alkyl groups such as glycidyloxypropyl and glycidyloxyoctyl groups. Of these, methyl, ethyl, propyl, glycidyloxypropyl and phenyl groups are preferred; methyl, ethyl and glycidyloxypropyl groups are more preferred; and methyl and glycidyloxypropyl groups are even more preferred.

R³ is a monovalent aliphatic hydrocarbon group of 1 to 10 carbon atoms, preferably 1 to 6 carbon atoms, and is more preferably a monovalent saturated or unsaturated aliphatic hydrocarbon group of 1 to 4 carbon atoms. The monovalent aliphatic hydrocarbon group represented by R³ may be linear, branched or cyclic. Specific examples include alkyl groups such as methyl, ethyl, propyl, butyl, pentyl, hexyl, heptyl, octyl and decyl groups; cycloalkyl groups such as cyclopentyl and cyclohexyl groups; and alkenyl groups such as vinyl and allyl groups. Methyl, ethyl, propyl and butyl groups are preferred; methyl and ethyl groups are more preferred; and methyl groups are even more preferred.

The subscripts a, b, c and d are numbers which indicate the molar ratios of the respective siloxane units and satisfy the conditions a ≥ 0.5, b ≥ 0, c ≥ 0, d ≥ 0 and a+b+c+d = 1.

The subscript 'a' is preferably a number which satisfies the condition 0.5 ≤ a ≤ 1. When a is less than 0.5, the amount of effective epoxy groups is low and so advantageous effects in the intended use cannot be counted on. Moreover, the resulting silanol oligomer has a high viscosity or assumes the state of a gum or solid, making it difficult to handle.

The subscript 'b' is preferably a number which satisfies the condition 0 ≤ b < 0.5, and is more preferably 0.

The subscript 'c' is preferably a number which satisfies the condition 0 ≤ c ≤ 0.5.

The subscript 'd' is preferably a number which satisfies the condition 0 ≤ d ≤ 0.2, and is more preferably 0.

The subscripts x and y represent the number of hydroxyl groups or alkoxy groups bonded per mole of silicon atoms in the siloxane units of a to d above, and are numbers that satisfy the conditions x ≥ 1.0 and y ≤ 0.5.

The subscript 'x' is preferably a number which satisfies the condition 1 ≤ x ≤ 2.

The subscript 'y' is preferably a number which satisfies the condition y ≤ 0.4, and is more preferably a number which satisfies the condition y ≤ 0.3.

Component (C) is preferably a compound of formula (1a) below.

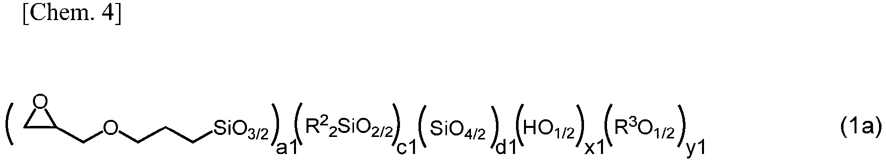

In the foregoing formula, R² and R³ are the same as above; a1, c1 and d1 are numbers which satisfy the conditions a1 ≥ 0.5, 0 ≤ c1 ≤ 0.5, 0 ≤ d1 ≤ 0.2 and a1+c1+d1 = 1; and x1 and y1 are numbers which satisfy the conditions x1 ≥ 1.0 and y1 ≤ 0.5.

Component (C) may be of one type used alone, or two or more may be used together.

The oligomer of component (C) has a weight-average molecular weight which, from the standpoint of, for example, the handling viscosity of the inventive composition, is preferably from 500 to 10,000, and more preferably from 500 to 1,000. The weight-average molecular weight of component (C) in this invention is a value determined relative to polystyrene of a known molecular weight as the reference material by gel permeation chromatography (GPC) measured under the following conditions.

### [Measurement Conditions]

| | |
|---|---|
| Developing solvent: | tetrahydrofuran (THF) |
| Flow rate: | 0.6 mL/min |
| Detector: | differential refractive index detector (RI) |
| Columns: | TSK Guardcolumn SuperH-H |
| | TSKgel SuperHM-N (one 6.0 mm I.D. × 15 cm column) |
| | TSKgel SuperH2500 (one 6.0 mm I.D. × 15 cm column) (all products of Tosoh Corporation) |
| Column temperature: | 40°C |
| Amount of sample injected: | 50 µL (2.0 wt% concentration THF solution) |

Component (C) has a kinematic viscosity that is preferably from 10 to 1,000 mm²/s, and more preferably from 100 to 800 mm²/s. This kinematic viscosity is the value measured at 25°C with a Cannon-Fenske viscometer by the method described in JIS Z8803: 2011.

The method for preparing component (C) used in this invention is not particularly limited. For example, component (C) may be prepared by (co)hydrolyzing under acidic conditions a 3-glycidyloxypropyl group-containing silane compound of formula (i) below, such as 3-glycidyloxypropyltrimethoxysilane, 3-glydicyloxypropyltriethoxysilane or a mixture thereof, as the essential silane monomer feedstock and, optionally, silane monomers that include any one, two or more, of the following: a silane compound of formula (ii) below, a silane compound of formula (iii) below and a silane compound of formula (iv) below. 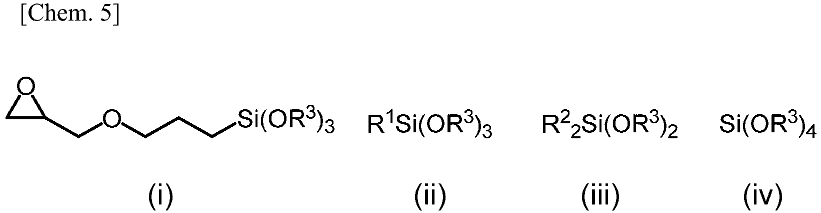 Here, R¹ to R³ are the same as above.

Specific examples of 3-glycidyloxypropyl group-containing silane compounds of above formula (i) include 3-glycidyloxypropyltrimethoxysilane, 3-glydicyloxypropyltriethoxysilane, 3-glycidyloxypropyltripropoxysilane and 3-glycidyloxypropyltributoxysilane.

Specific examples of the silane compound of above formula (ii) include methyltrimethoxysilane, methyltriethoxysilane, ethyltrimethoxysilane, ethyltriethoxysilane, vinyltrimethoxysilane, vinyltriethoxysilane, propyltrimethoxysilane, propyltriethoxysilane, butyltrimethoxysilane, butyltriethoxysilane, hexyltrimethoxysilane, hexyltriethoxysilane, cyclohexyltrimethoxysilane, cyclohexyltriethoxysilane, phenyltrimethoxysilane, phenyltriethoxysilane, octyltrimethoxysilane, octyltriethoxysilane, decyltrimethoxysilane and decyltriethoxysilane.

Specific examples of the silane compound of above formula (iii) include dimethyldimethoxysilane, dimethyldiethoxysilane, diethyldimethoxysilane, diethyldiethoxysilane, methylethyldimethoxysilane, methylethyldiethoxysilane, methylpropyldimethoxysilane, methylpropyldiethoxysilane, 3-glycidyloxypropylmethyldimethoxysilane, 3-glycidyloxypropylmethyldiethoxysilane, cyclopentylmethyldimethoxysilane, cyclohexylmethyldimethoxysilane, methylphenyldimethoxysilane, methylphenyldiethoxysilane, diphenyldimethoxysilane, diphenyldiethoxysilane and methyloctyldimethoxysilane.

Specific examples of the silane compound of above formula (iv) include tetramethoxysilane, tetraethoxysilane, tetrapropoxysilane and tetrabutoxysilane.

Hydrolytic condensation products of these may also be used. These may be used singly, or two or more may be used together.

The amount in which these silane monomers are used is preferably adjusted according to the molar ratios of the respective siloxane units making up the target organopolysiloxane (i.e., the values of the subscripts 'a' to 'd' in formula (1)).

The amount of water used in the hydrolytic condensation reaction is preferably from 0.8 to 1.1 moles per mole of alkoxysilyl and other Si(OR³) groups (wherein R³ is the same as above) on the silane monomers used as the starting materials.

The acid ingredient that adjusts the system to acidic conditions at the time of the hydrolysis reaction is not particularly limited, so long as it is a Bronsted acid available on the market. However, from the standpoint of ready availability, formic acid, acetic acid, citric acid, hydrochloric acid and nitric acid are preferred. To suppress a decrease in water solubility due to an increase in the molecular weight of the organopolysiloxane obtained by excessive dehydrative condensation reactions between silanols and to a reduction in the amount of silanol groups, the amount of acid used is preferably from 0.0001 to 0.01 mole per mole of silane monomer.

An organic solvent may be optionally used in the hydrolysis reaction, provided that doing so does not hinder the reaction. The organic solvent used is preferably one which is compatible with water as a reaction material; for example, alcohols, esters, ketones and ethers are preferred. Taking into account the distillation conditions when removing alcohol that forms, it is preferable for the boiling point of the organic solvent to be on the low side; a solvent having a boiling point of 150°C or less under atmosphere pressure is desirable.

Specific examples of alcohols include methanol, ethanol, propanol, isopropanol, butanol, isobutanol, pentyl alcohol, neopentyl alcohol, hexyl alcohol and cyclohexyl alcohol.

Specific examples of esters include ethyl acetate and butyl acetate.

Specific examples of ketones include acetone, methyl ethyl ketone and cyclohexanone.

Specific examples of ethers include tetrahydrofuran, tetrahydropyran and dioxane.

The reaction conditions preferably entail mixing the above silane monomers together with water and stirring at between 55°C and 70°C for a period of 1 to 5 hours, thereby causing hydrolysis reactions on the silane monomers to proceed, and then distilling off a water/alcohol mixture under reduced pressure within a temperature range of 30°C and 80°C.

The 3-glycidyloxypropylsilanol oligomer used in the invention preferably has water and free alcohol contents that are each 1 wt% or less. When thus constituted, the oligomer can be made volatile organic compound (VOC) free, which is advantageous for VOC reduction of the overall conductive silicone composition. In this invention, "VOC free" means that the free alcohol content within the oligomer or the inventive composition is preferably 1 wt% or less. Here, "alcohol" refers in particular to methanol or ethanol. Also, "water" is not a VOC, but because it can react with epoxy groups when present in excess, water should be excluded to the extent possible.

Component (C) is added in an amount per 100 parts by weight of component (A) of from 0.01 to 10 parts by weight, preferably from 0.2 to 2.0 parts by weight. At an amount of component (C) addition below 0.01 part by weight, the target increase in rebound resilience and the target reduction in compression set cannot be conferred. At more than 10 parts by weight, the resulting compound becomes tacky and processability thereafter worsens, or the tensile strength and other mechanical properties of the silicone rubber obtained by curing this compound decline.

### -- Component (D) --

Component (D) is a curing agent. The curing agent is not particularly limited, provided that it is one which can cure above component (A). Compounds known as rubber curing agents can generally be used. Examples include components (D1) and (D2) below.
(D1) Addition reaction (hydrosilylation reaction) type curing agents; i.e., hydrosilylation reaction curing agents which are combinations of an organohydrogenpolysiloxane (crosslinking agent) and a hydrosilylation catalyst.
(D2) Organic peroxides

### (D1) Addition Reaction-Type Curing Agents

### • Organohydrogenpolysiloxane

The organohydrogenpolysiloxane serving as the crosslinking agent in the above addition reaction-type curing agent (D1) is preferably one having two or more hydrosilyl groups per molecule. An organohydrogenpolysiloxane of formula (2) below is especially preferred.

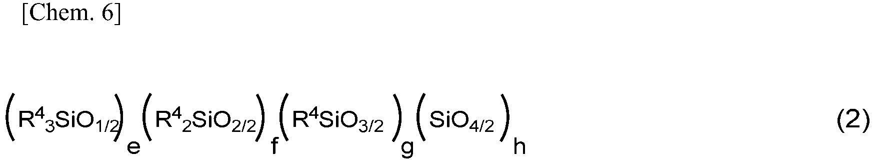

Here, each R⁴ is independently a group selected from a hydrogen atom; alkyl groups of 1 to 8, preferably 1 to 6, carbon atoms; cycloalkyl groups of 6 to 10, preferably 6 to 8, carbon atoms; aryl groups of 6 to 10, preferably 6 to 8, carbon atoms; and aralkyl groups of 7 to 10, preferably 7 to 9, carbon atoms. However, at least two, preferably from 2 to 200, and more preferably from 2 to 130, occurrences of R⁴ on the molecule are hydrogen atoms.

Alkyl groups represented by R⁴ may be linear or branched. Specific examples include methyl, ethyl, propyl, isopropyl, butyl, isobutyl, tert-butyl, pentyl and hexyl groups.

Specific examples of cycloalkyl group include cyclopentyl and cyclohexyl groups.

Specific examples of aryl groups include phenyl and tolyl groups.

Specific examples of aralkyl groups include benzyl and 2-phenylpropyl groups.

Fluoroalkyl groups and the like in which some or all of the hydrogen atoms on the above groups are substituted with fluorine atoms or other halogen atoms may be used.

The subscript 'e' is an integer which satisfies the condition 2 ≤ e ≤ 30, and preferably satisfies the condition 2 ≤ e ≤ 20.

The subscript 'f' is an integer which satisfies the condition 0 ≤ f ≤ 300, and preferably satisfies the condition 3 ≤ f ≤ 200.

The subscript 'g' is an integer which satisfies the condition 0 ≤ g ≤ 10, and preferably satisfies the condition 0 ≤ g ≤ 5.

The subscript 'h' is an integer which satisfies the condition 0 ≤ h ≤ 30, and preferably satisfies the condition 0 ≤ h ≤ 20.

The molecular structure of the organohydrogenpolysiloxane may be a linear, cyclic, branched or three-dimensional network structure. In this case, the number of silicon atoms per molecule (or the degree of polymerization) is preferably from about 2 to about 300, and more preferably from about 4 to about 200. Preferred use can be made of organohydrogenpolysiloxanes that are liquid at 25°C. The hydrosilyl groups may be at the ends of the molecular chain or on side chains (partway along the molecular chain), or may be at both. The method of measuring the degree of polymerization is as described above for component (A).

Specific examples of such organohydrogenpolysiloxanes include 1,1,3,3-tetramethyldisiloxane, 1,3,5,7-tetramethylcyclotetrasiloxane, methylhydrogencyclopolysiloxanes, methylhydrogensiloxane/dimethylsiloxane cyclic copolymers, tris(dimethylhydrogensiloxy)methylsilane, tris(dimethylhydrogensiloxy)phenylsilane, methylhydrogenpolysiloxanes capped at both ends with trimethylsiloxy groups, dimethylsiloxane/methylhydrogensiloxane copolymers capped at both ends with trimethylsiloxy groups, dimethylpolysiloxanes capped at both ends with dimethylhydrogensiloxy groups, dimethylsiloxane/methylhydrogensiloxane copolymers capped at both ends with dimethylhydrogensiloxy groups, methylhydrogensiloxane/diphenylsiloxane copolymers capped at both ends with trimethylsiloxy groups, methylhydrogensiloxane/diphenylsiloxane/dimethylsiloxane copolymers capped at both ends with trimethylsiloxy groups, cyclic methylhydrogenpolysiloxanes, cyclic methylhydrogensiloxane/dimethylsiloxane copolymers, cyclic methylhydrogensiloxane/diphenylsiloxane/dimethylsiloxane copolymers, copolymers consisting of (CH₃)₂HSiO_{1/2} units and SiO_{4/2} units, copolymers consisting of (CH₃)₂HSiO_{1/2} units, SiO_{4/2} units and (C₆H₅)SiO_{3/2} units, copolymers consisting of (CH₃)₃SiO_{1/2} units, (CH₃)HSiO_{2/2} units and (CH₃)₂SiO_{2/2} units, and the above example compounds in which some or all methyl groups have been substituted with other alkyl groups such as ethyl or propyl groups or with aryl groups such as phenyl groups.

Specific examples of such organohydrogenpolysiloxanes include compounds of the structural formulas shown below. One of these may be used alone or two or more may be used together. 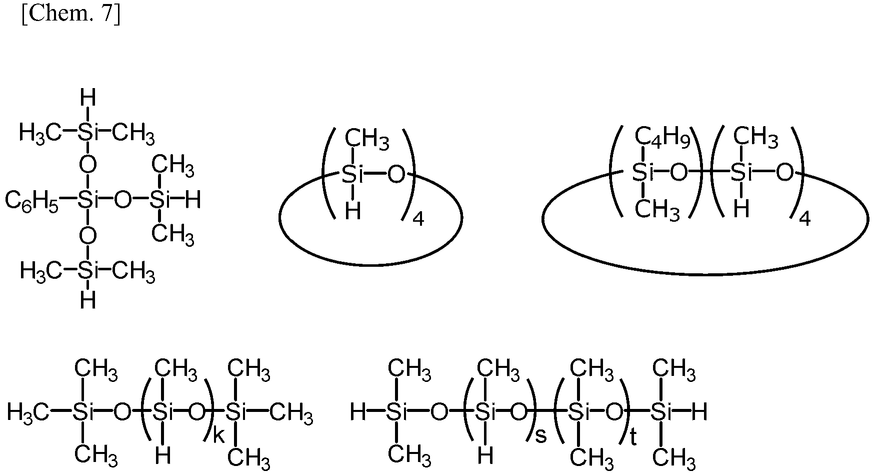 In these formulas, k is an integer from 2 to 10, and s and t are each integers from 0 to 10.

This organohydrogenpolysiloxane has a kinematic viscosity at 25°C that is preferably from 0.5 to 10,000 mm²/s, more preferably from 1 to 300 mm²/s, and even more preferably from 1 to 100 mm²/s. The kinematic viscosity is the value measured with a Cannon-Fenske viscometer by the method described in JIS 28803:2011.

It is desirable to include this organohydrogenpolysiloxane in an amount such that the molar ratio of silicon-bonded hydrogen atoms (i.e., hydrosilyl groups) in the organohydrogenpolysiloxane with respect to the silicon-bonded alkenyl groups in component (A), expressed as (hydroxyl groups/alkenyl groups), is preferably from 0.5 to 10, more preferably from 0.8 to 6, and even more preferably from 1 to 5. At less than 0.5, crosslinking is inadequate and a sufficient mechanical strength may not be obtainable after curing. At more than 10, the physical properties after curing decrease; in particular, the heat resistance and compression set sometimes become markedly inferior.

### • Hydrosilylation Catalyst

The hydrosilylation catalyst used in the above addition reaction-type curing agent (D1) is a catalyst which promotes addition reactions between alkenyl groups on component (A) and hydrosilyl groups on the organohydrogenpolysiloxane serving as a crosslinking agent.

Examples of hydrosilylation catalysts include platinum group metal catalysts. Platinum group metal catalysts include uncombined platinum group metals and compounds thereof. Catalysts that have hitherto been known as catalysts for addition reaction-curable silicone rubber compositions may be used for this purpose.

Specific examples include platinum catalysts such as microparticulate platinum metal adsorbed onto a support such as silica, alumina or silica gel, platinic chloride, chloroplatinic acid, reaction products of chloroplatinic acid and monovalent alcohols, complexes of chloroplatinic acid and olefins, complexes of chloroplatinic acid and vinyl group-containing (poly)siloxanes, and complexes of chloroplatinic acid and phosphite esters; palladium catalysts; rhodium catalysts; and ruthenium catalysts. These may be used singly or two or more may be used together. Of these, platinum or a platinum compound is preferred.

The amount of hydrosilylation catalyst added may be the so-called catalytic amount which is able to promote an addition reaction. In general, the amount of catalyst, based on the weight of the platinum group metal, is preferably from 1 ppm to 1 wt%, and more preferably from 10 to 500 ppm, of the weight of component (A). When the amount of catalyst added is less than 1 ppm, the addition reaction may not be fully promoted and curing may be inadequate. On the other hand, when the amount added exceeds 1 wt%, further addition beyond this level has little influence on the reactivity and may be uneconomical.

In addition to the above catalyst, an addition crosslinking regulator may be used for the purpose of adjusting the rate of cure. Specific examples include ethynylcyclohexanol and tetramethyltetravinylcyclotetrasiloxane.

### (D2) Organic Peroxides

Examples of the organic peroxide (D2) include benzoyl peroxide, 2,4-dichlorobenzoyl peroxide, p-methylbenzoyl peroxide, o-methylbenzoyl peroxide, 2,4-dicumyl peroxide, 2,5-dimethyl-2,5-bis(t-butylperoxy)hexane, di-t-butyl peroxide, t-butyl perbenzoate and 1,6-hexanediol bis(t-butylperoxycarbonate). These may be used singly or two or more may be used together.

The amount of organic peroxide added is an effective curing amount, the amount of addition being preferably from 0.1 to 15 parts by weight, and more preferably from 0.2 to 10 parts by weight, per 100 parts by weight of component (A). At a sufficient amount of addition, the crosslinking reactions fully proceed and worsening of the physical properties, such as decreased hardness, inadequate rubber strength and increased compression set, does not arise. Also, when the amount of addition does not exceed the above range, this is economically desirable, the amount of curing agent decomposition products is sufficiently small, and there is no worsening of physical properties such as increased compression set and no increase in sheet discoloration.

### -- Other Ingredients --

In addition to the above ingredients, a reinforcing silica having a specific surface area (BET adsorption method) of from 100 to 450 m²/g may be added to the conductive silicone rubber composition of the invention within a range that does not detract from the advantageous effects of the invention. Specific examples of such reinforcing silicas include fumed silica, precipitated silica (hydrous silica) and any of these whose surfaces have been subjected to hydrophobizing treatment with chlorosilane, hexamethyldisilazane or the like. Of these silicas, a fumed silica that has been hydrophobized is preferred.

In addition, flame retardancy imparting agents such as iron oxide and halogen compounds, antistatic agents, softeners, antioxidants, ultraviolet absorbers, colorants and the like may also be added to the conductive silicone rubber composition of the invention.

### -- Method for Preparing Composition --

The method for preparing the silicone rubber composition of this invention is not particularly limited. For example, the composition can be obtained by using a rubber kneading machine such as a two-roll mill, Banbury mixer or dough mixer (kneader) to uniformly mix the above ingredients and, if necessary, carrying out heat treatment. In this case, the inventive composition can be obtained by, for example, mixing together components (A) to (C) and, where necessary, a finely divided silica-based filler or the like as a reinforcing silica, as well as other ingredients to prepare a base compound, and then adding and mixing in the curing agent (D). Alternatively, it is also possible to employ the method of preparing a base compound by first mixing together the organopolysiloxane (A), the silanol oligomer (C) and, if necessary, a finely divided silica-based filler or the like as a reinforcing silica, similarly mixing therein the above carbon black powder (B) using a rubber kneader, and also adding and mixing in (D) a curing agent.

### -- Curing Method --

The conductive silicone rubber composition thus obtained can be formed or molded according to the required application by various methods typically used to form or mold silicone compositions, such as molding under applied pressure with a mold, extrusion or injection molding. The molding conditions are not particularly limited, although a temperature of between 100°C and 400°C and a period of from 5 seconds to 1 hour are preferred. In secondary curing after molding, the cured silicone rubber can be obtained by secondary curing at between 150°C and 250°C for 1 to 30 hours.

### -- Cured Product (Silicone Rubber) --

The cured product (silicone rubber) of the invention thus obtained has a compression set, as measured according to the method described in JIS K6249:2003, of preferably 30% or less, more preferably 25% or less, and even more preferably 20% or less.

The rebound resilience, as measured according to the method described in JIS K6255: 2013, is preferably 50% or more, more preferably 55% or more, and even more preferably 60% or more.

The cured product of the invention is preferably one which satisfies both the above compression set and rebound resilience.

The conductive silicone rubber composition of the invention provides a conductive silicone rubber (cured product) having excellent compression set and rebound resilience. Hence, the conductive silicone rubber composition of the invention shows promise for use in a broad range of applications where conductive silicone rubbers are employed, including electrical equipment, office equipment rollers, and the automotive, construction, health care and food industries.

### EXAMPLES

Synthesis Examples, Comparative Synthesis Examples, Reference Examples, Comparative Reference Examples, Examples of the invention and Comparative Examples are given below by way of illustration, although the invention is not limited by these Examples. In the Examples below, unless noted otherwise, "parts" and "%" respectively signify parts by weight and percent by weight (wt%). The apparatuses and measurement conditions used in the Examples of the invention were as follows.

### (1) GPC Measurement Conditions (measurement of weight-average molecular weight)

• Method for Measuring Weight-Average Molecular Weight of Component (A)

| | |
|---|---|
| Apparatus: | HLC-8320 GPC, from Tosoh Corporation |
| Developing solvent: | tetrahydrofuran (THF) |
| Flow rate: | 0.6 mL/min |
| Detector: | differential refractive index detector (RI) |
| Columns: | TSK Guardcolumn SuperH-H |
| | TSKgel SuperH4000 (one 6.0 mm I.D. × 15 cm column) |
| | TSKgel SuperH3000 (one 6.0 mm I.D. × 15 cm column) |
| | TSKgel SuperH2000 (one 6.0 mm I.D. × 15 cm column) (all products of Tosoh Corporation) |
| Column temperature: | 40°C |
| Amount of sample injected: | 50 µL (2.0 wt% concentration THF solution) |
| Reference: | monodisperse polystyrene |

• Method for Measuring Weight-Average Molecular Weight of Component (A) in Rubber Compound
This was measured using the same apparatus and conditions as above.
• Method for Measuring Weight-Average Molecular Weight of Component (C)

| | |
|---|---|
| Apparatus: | HLC-8320 GPC, from Tosoh Corporation |
| Developing solvent: | tetrahydrofuran (THF) |
| Flow rate: | 0.6 mL/min |
| Detector: | differential refractive index detector (RI) |
| Columns: | TSK Guardcolumn SuperH-H |
| | TSKgel SuperHM-N (one 6.0 mm I.D. × 15 cm column) |
| | TSKgel SuperH2500 (one 6.0 mm I.D. × 15 cm column) (all products of Tosoh Corporation) |
| Column temperature: | 40°C |
| Amount of sample injected: | 50 µL (2.0 wt% concentration THF solution) |
| Reference: | monodisperse polystyrene |

### (2) Proton Nuclear Magnetic Resonance Spectrum (¹H-NMR) Measurement Conditions

| | |
|---|---|
| Apparatus: | AVANCE III400, from Bruker |
| Solvent: | CDCl₃ |
| Internal Standard: | tetramethylsilane (TMS) |

### (3) Method for Measuring Kinematic Viscosity:

Measurement was carried out with a Cannon-Fenske viscometer by the method described in JIS Z8803: 2011.

### (4) Method for Measuring Plasticity:

A carbon black-filled silicone rubber compound was kneaded 15 times on a three-roll mill, and the Williams plasticity was measured ten minutes later (initial plasticity) by the method described in JIS K6249: 2003.

### (5) Measurement of Physical Properties of Cured Silicone Rubber

A given amount of curing agent (D) was added to 100 parts of the subsequently described silicone rubber compound and these were uniformly mixed on a two-roll mill, following which the composition was press-cured at 120°C for 10 minutes (addition crosslinking) or at 165°C for 10 minutes (organic peroxide crosslinking). A 4-hour postcure at 200°C was then carried out, thereby producing for testing: 2 mm thick sheets and 12.5 mm thick, 29.5 mm diameter disc-shaped rubber moldings. The density, hardness (Durometer A), tensile strength, elongation at break and compression set (180°C/22 hours, 25% compression) of the test sheets thus produced were measured according to the methods described in JIS K6249:2003.

The rebound resilience was measured by the method described in JIS K6255: 2013.

The volume resistivity (measurement conditions: sheet shape was 2 mm thick × 20 mm wide × 150 mm long; current, 0.1 mA; voltage electrode, 20 mm) was measured based on the method described in JIS K6271: 2015.

Samples having a high rebound resilience value and a low compression set value were judged to be good in terms of the rubber properties.

### (6) Method for Evaluating Processability of Rubber Compound

- Evaluation Based on Flexibility
   The plasticity of a product immediately after carbon compounding (the initial silicone rubber compound described in (4)) and the plasticity of a 6 month-stored product obtained by sealing the initial silicone rubber compound in a polyethylene bag and holding it for 6 months in a 50°C/80% RH test chamber were compared. Product for which the decrease in plasticity after storage was less than 15 points was rated as "○" (good processability), and product for which the degree in plasticity was 15 points or more was rated as "×" (poor processability).
- Measurement of Weight-Average Molecular Weight of Component (A)
   The weight-average molecular weight of component (A) in the above product immediately after carbon compounding and the weight-average molecular weight of component (A) in the product that had been stored for 6 months were each measured and those results were compared.

The method for measuring plasticity was as described above in (4), and the method for measuring the weight-average molecular weight was as described above in (1).

### [1] Synthesis of Water-Soluble 3-Glycidyloxypropylsilanol Oligomer

### [Synthesis Example 1] Synthesis of Component (C-1)

A one-liter, three-neck flask equipped with a stirrer, a reflux condenser, a dropping funnel and a thermometer was charged with 472 g (2.0 mol) of 3-glycidyloxypropyltrimethoxysilane. To this was added dropwise 108 g of 0.2% hydrochloric acid (6.0 moles in terms of the amount of water). After dropwise addition, the hydrolysis reaction proceeded and the temperature of the reaction mixture rose, but temperature control was carried by air cooling or water cooling such that the reaction proceeded within an internal temperature range of 20°C to 40°C. Following the completion of dropwise addition, the flask contents were stirred under heating at 70°C for 1 hour, causing hydrolytic condensation reactions on the silyl groups to proceed. The alcohol that formed due to the hydrolysis reaction and excess water were subsequently removed by vacuum distillation at 70°C, giving a clear, colorless liquid.

This liquid was freely compatible with and soluble in water, and had a kinematic viscosity at 25°C of 726 mm²/s. The functional group content of the epoxy groups included was 189 g/mol, and the weight-average molecular weight was 830. As a result of analysis by ¹H-NMR and GPC, this was found to have the average compositional structure shown in formula (3) below. FIG. 1 shows the ¹H-NMR spectrum

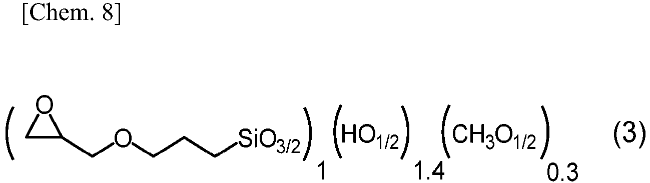

### [Synthesis Example 2] Synthesis of Component (C-2)

Aside from using 236 g (1.0 mol) of 3-glycidyloxypropyltrimethoxysilane and 120 g (1.0 mol) of methyldimethoxysilane, and setting the amount of 0.2% hydrochloric acid to 90 g (5.0 moles in terms of the amount of water), the target 3-glycidyloxypropyl group-containing silanol oligomer was obtained in the same way as in Synthesis Example 1.

The resulting oligomer had a kinematic viscosity at 25°C of 218 mm²/s, the functional group content of the epoxy groups included was 258 g/mol, and the weight-average molecular weight was 700. As a result of analysis by ¹H-NMR and GPC measurement, this was found to have the structure shown in formula (4) below.

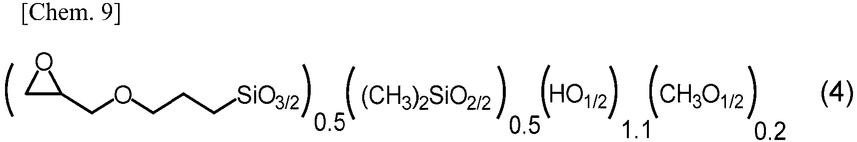

### [Synthesis Example 3] Synthesis of Component (C-3)

Aside from using 425 g (1.8 mol) of 3-glycidyloxypropyltrimethoxysilane and 44 g (1.0 mol) of 3-glycidyloxypropylmethyldimethoxysilane, and setting the amount of 0.2% hydrochloric acid to 104.4 g (5.8 moles in terms of the amount of water), the target 3-glycidyloxypropyl group-containing silanol oligomer was obtained in the same way as in Synthesis Example 1.

The resulting oligomer had a kinematic viscosity at 25°C of 361 mm²/s, the functional group content of the epoxy groups included was 200 g/mol, and the weight-average molecular weight was 510. As a result of analysis by ¹H-NMR and GPC measurement, this was found to have the structure shown in formula (5) below.

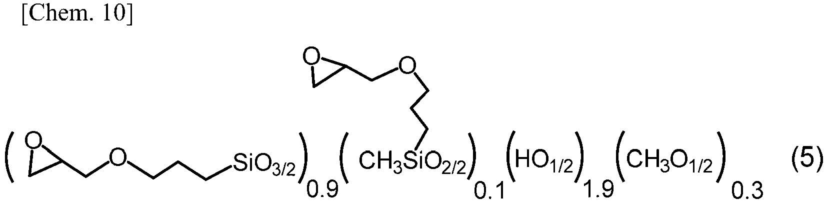

### [Comparative Synthesis Example 1] Synthesis of Component (Comparative C-1)

Aside from using 31.2 g (0.3 mol) of trimethylmethoxysilane, 48.0 g (0.4 mol) of dimethyldimethoxysilane and 40.8 g (0.3 mol) of methyltrimethoxysilane instead of 3-glycidyloxypropyltrimethoxysilane, a silanol group-containing oligomer containing no 3-glycidyloxypropyl groups was obtained in the same way as in Synthesis Example 1.

The resulting oligomer had a kinematic viscosity at 25°C of 15 mm²/s, and the weight-average molecular weight was 1,150. As a result of analysis by ¹H-NMR and GPC measurement, this was found to have the structure shown in formula (6) below.

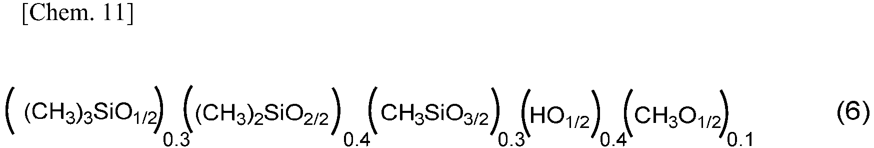

### [Comparative Synthesis Example 2] Synthesis of Component (Comparative C-2)

Aside from using only 120 g (1.0 mol) of dimethyldimethoxysilane instead of 3-glycidyloxypropyltrimethoxysilane and setting the amount of 0.2% hydrochloric acid to 90 g (5.0 moles in terms of the amount of water), a linear disilanol-terminated polymer containing no 3-glycidyloxypropyl groups was obtained in the same way as in Synthesis Example 1.

The resulting polymer had a kinematic viscosity at 25°C of 13 mm²/s, and the weight-average molecular weight was 270. As a result of analysis by ¹H-NMR and GPC measurement, this was found to have the structure shown in formula (7) below.

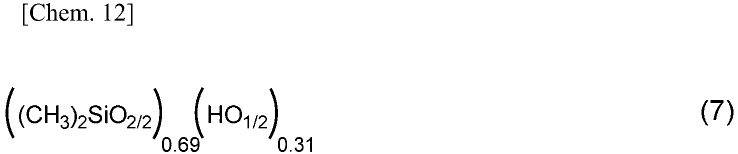

### [2] Compounding Ingredients

The ingredients used in the Examples of the invention and the Comparative Examples are shown below.

### (A) Crude Organopolysiloxane Rubber

A crude organopolysiloxane rubber consisting of 99.825 mol% dimethylsiloxane units, 0.15 mol% methylvinylsiloxane units and 0.025 mol% dimethylvinylsiloxy units, and having an average of 12 silicon-bonded vinyl groups per molecule and an average degree of polymerization of 8,000.

### (B) Carbon Black

A carbon black having an average particle size of 35 nm, a specific surface area of 68 m²/g, a bulk density of 0.04 g/mL and an electrical resistivity of 0.21 Ω·cm (trade name: Denka Black Powder Product, from Denka Co., Ltd.).

### (C) 3-Glycidyloxypropylsilanol Oligomers

| | |
|---|---|
| (C-1): | The oligomer synthesized in Synthesis Example 1 |
| (C-2): | The oligomer synthesized in Synthesis Example 2 |
| (C-3): | The oligomer synthesized in Synthesis Example 3 |

### (Comparative Ingredients)

| | |
|---|---|
| (Comparative C-1): | The oligomer synthesized in Comparative Synthesis Example 1 |
| (Comparative C-2): | The oligomer synthesized in Comparative Synthesis Example 2 |
| (Comparative C-3): | 3-Glycidyloxypropyltrimethoxysilane (trade name: KBM-403, from Shin-Etsu Chemical Co., Ltd.; kinematic viscosity, 3.0 mm²/s; weight-average molecular weight, 236) |

### (D) Curing Agents

| | |
|---|---|
| (D1) | Addition Reaction Curing Agent: 0.01 part of a platinum catalyst (from Shin-Etsu Chemical Co., Ltd.) containing (platinum atom weight basis) 1% of a chloroplatinic acid-divinyldisiloxane complex and 0.85 part of the organohydrogenpolysiloxane of formula (8) below (Shin-Etsu Chemical Co., Ltd.; kinematic viscosity at 25°C, 17 mm²/s) as the platinum catalyst, and 0.05 part of ethynylcyclohexanol as the reaction regulator were added to 100 parts of a silicone rubber compound that included component (A), component (B), component (C) and reinforcing silica but did not include component (D). |
| 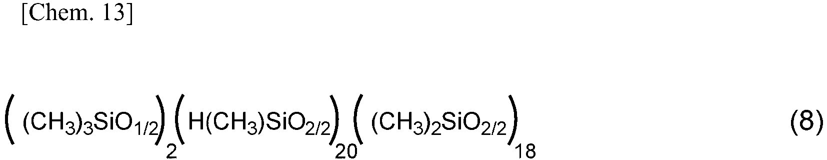 | |
| (D2) | Organic Peroxide Curing Agent: 2,5-Dimethyl-2,5-di-(t-butylperoxy)hexane was added. This was added in an amount of 0.5 part to 100 parts of a silicone rubber compound that included component (A), component (B), component (C) and reinforcing silica but did not include component (D). |

### Other additives:

Fumed silica that was surface-treated with dimethyldichlorosilane and had a BET specific surface area of 110 m²/g and a carbon content of 0.9% (trade name: R-972, from Nippon Aerosil Co., Ltd.) was used as the reinforcing silica.

### [3] Preparation of Silicone Rubber Compositions, Production and Evaluation of Cured Products

### [Example 1]

A silicone rubber compound was obtained by charging a pressure kneader with (A) 100 parts of crude organopolysiloxane rubber, (B) 30 parts of carbon black and 1.0 part of (C-1) as the 3-glycidyloxypropylsilanol oligomer, and kneading for 5 minutes.

An amount of 0.5 part of curing agent (D2) was uniformly mixed together with 100 parts of this silicone rubber compound in a two-roll mill. Next, the material was molded for 10 minutes in a mold heated at 120°C or at 165°C, following which a 4-hour post-cure at 200°C was carried out, thereby producing for testing: 2 mm thick sheets and 12.5 mm thick, 29.5 diameter disc-shaped rubber moldings.

The rubber properties shown in Table 1 were evaluated using the resulting rubber sheets and rubber moldings. The results are presented in Table 1.

### [Examples 2 to 5, Comparative Examples 1 to 6]

Silicone rubber compositions were prepared by carrying out compounding for Examples 2 to 5 and Comparative Examples 1 to 6 as shown in Table 1, rubber sheets and rubber moldings were produced in the same way as in Example 1, and the various rubber properties were evaluated. The results are presented in Table 1.

**[Table 1]**

| Ingredients (Pbw) | Example | | | | | Comparative Example | | | | | |
|---|---|---|---|---|---|---|---|---|---|---|---|
| | 1 | 2 | 3 | 4 | 5 | 1 | 2 | 3 | 4 | 5 | 6 |
| (A) | 100 | 100 | 100 | 100 | 100 | 100 | 100 | 100 | 100 | 100 | 100 |
| (B) | 30 | 13 | 13 | 13 | 13 | 30 | 13 | 13 | 13 | 13 | 13 |
| (C-1) | 1 | 1 | 1 | | | | | | | | |
| (C-2) | | | | 1 | | | | | | | |
| (C-3) | | | | | 1 | | | | | | |
| (Comparative C-1) | | | | | | | | | 1 | | |
| (Comparative C-2) | | | | | | | | | | 1 | |
| (Comparative C-3) | | | | | | | | | | | 1 |
| Reinforcing silica | 0 | 15 | 15 | 15 | 15 | 0 | 15 | 15 | 15 | 15 | 15 |
| Type of curing agent | (D2) | (D2) | (D1) | (D2) | (D2) | (D2) | (D2) | (D1) | (D2) | (D2) | (D2) |
| Initial plasticity | 245 | 171 | 171 | 168 | 178 | 220 | 175 | 175 | 154 | 159 | 178 |
| Density (23°C) | 1.10 | 1.13 | 1.13 | 1.13 | 1.13 | 1.10 | 1.13 | 1.13 | 1.13 | 1.13 | 1.13 |
| Hardness (type A) | 55 | 43 | 43 | 42 | 42 | 55 | 41 | 42 | 39 | 40 | 38 |
| Tensile strength (MPa) | 5.1 | 5.6 | 5.6 | 5.7 | 5.2 | 5 | 5.9 | 4.5 | 5.4 | 5 | 5.1 |
| Elongation at break (%) | 240 | 360 | 390 | 360 | 350 | 230 | 380 | 310 | 430 | 380 | 370 |
| Rebound resilience (%) | 55 | 65 | 65 | 62 | 63 | 48 | 60 | 61 | 59 | 59 | 51 |
| Compression set (%) | 28 | 18 | 16 | 15 | 17 | 35 | 29 | 21 | 26 | 28 | 22 |
| Volume resistivity (Ω·m) | 0.26 | 13.1 | 24 | 6.4 | 15 | 0.22 | 8.6 | 21 | 8.8 | 7.3 | 29 |

### [4] Production and Evaluation of Silicone Rubber Compounds

### [Reference Examples 1 to 4, Comparative Reference Examples 1 to 5]

Silicone rubber compounds were obtained by compounding the ingredients in Table 2 in the same way as, respectively, Examples 1, 2, 4 and 5 and Comparative Examples 1, 2 and 4 to 6.

The processabilities of the resulting silicone rubber compounds were evaluated by the method described in (6) above. The results are presented in Table 2.

**[Table 2]**

| Ingredients (pbw) | Reference Example | | | | Comparative Reference Example | | | | |
|---|---|---|---|---|---|---|---|---|---|
| | 1 | 2 | 3 | 4 | 1 | 2 | 3 | 4 | 5 |
| (A) | 100 | 100 | 100 | 100 | 100 | 100 | 100 | 100 | 100 |
| (B) | 30 | 13 | 13 | 13 | 30 | 13 | 13 | 13 | 13 |
| (C-1) | 1 | 1 | | | | | | | |
| (C-2) | | | 1 | | | | | | |
| (C-3) | | | | 1 | | | | | |
| (Comparative C-1) | | | | | | | 1 | | |
| (Comparative C-2) | | | | | | | | 1 | |
| (Comparative C-3) | | | | | | | | | 1 |
| Reinforcing silica | 0 | 15 | 15 | 15 | 0 | 15 | 15 | 15 | 15 |
| Initial plasticity | 245 | 171 | 168 | 178 | 220 | 175 | 154 | 159 | 178 |
| Plasticity over time at 50°C | 248 | 175 | 170 | 179 | 192 | 144 | 120 | 140 | 162 |
| Processability rating | ○ | ○ | ○ | ○ | × | × | × | × | × |
| Degree of polymerization of starting material (A) | 8,000 | 8,000 | 8,000 | 8,000 | 8,000 | 8,000 | 8,000 | 8,000 | 8,000 |
| Degree of polymerization immediately after compounding | 7,900 | 7,900 | 7,800 | 7,900 | 7,400 | 7,200 | 7,300 | 7,400 | 7,500 |
| Degree of polymerization over time at 50°C | 7,700 | 7,600 | 7,700 | 7,900 | 6,200 | 5,400 | 5,600 | 5,800 | 6,500 |

### [Evaluation Results]

As shown in Table 1, it is apparent that each of the silicone rubber compositions obtained in Examples 1 to 5 satisfy the conditions of the invention and that, with regard to the physical properties of molded test sheets of the respective millable silicone rubber compositions in the examples in which the 3-glycidyloxypropylsilanol oligomer of component (C) was added, that the compression set and rebound resilience performance are improved.

By contrast, in Comparative Example 4, component (C) is a silanol oligomer containing no 3-glycidyloxypropyl groups. Not only are the desired compression set and rebound resilience performances not obtained, the rebound resilience has worsened even compared with Comparative Example 2 in which component (C) was not added.

In Comparative Example 5, a linear silanol polymer containing no 3-glycidyloxypropyl groups was used as component (C); the rebound resilience was similarly inferior to that in Comparative Example 2.

Comparative Example 6 is a composition in which 3-glycidyloxypropyltrimethoxysilane (KBM-403), which is the starting material for the 3-glycidyloxypropylsilanol oligomer of component (C-1), was added. The rebound resilience was much worse than in Comparative Example 2 in which component (C) was not added. The compression set was improved over that of Comparative Example 2, but could not attain the values in Examples 2, 4 and 5 of the invention. It is apparent form this that improvements in compression set and rebound resilience are not linked.

Moreover, as shown in Table 2, with regard to the plasticity of the respective millable silicone rubber compounds in Reference Examples 1 to 4 in which the 3-glycidyloxypropylsilanol oligomer of component (C) was added, relative to Comparative Reference Examples 1 to 5 in which component (C) was not added, the initial plasticity either is a sufficient value or has become higher and the decrease in plasticity after six months of storage at 50°C and 80% RH is held very low, indicating a good rubber processability. In addition, comparing the degree of polymerization of the component (A) polymer, component (A) of the rubber compounds in which component (C) was added underwent little decrease in the degree of polymerization following six months of storage at 50°C and 80% RH relative to immediately after carbon addition, which suggests that the main factor suppressing a decrease in the plasticity of the silicone rubber compound is an improvement effect due to the prevention of component (A) polymer cleavage.

The above results demonstrate that the inventive conductive silicone rubber compositions in which a 3-glycidyloxypropylsilanol oligomer has been added have an excellent processability, and that improvements in both compression set and rebound resilience are achieved in cured silicone rubber products obtained using such compositions.

## Claims

1. A conductive silicone rubber composition comprising:
(A) 100 parts by weight of an organopolysiloxane having two or more silicon-bonded alkenyl groups per molecule,
(B) 0.5 to 40 parts by weight of conductive carbon black,
(C) 0.01 to 10 parts by weight of a 3-glycidyloxypropylsilanol oligomer of formula (1) below 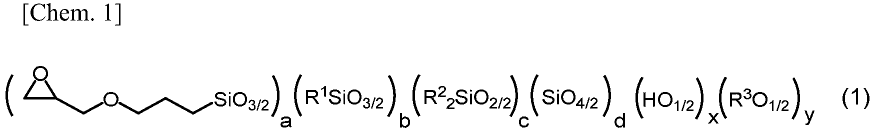 (wherein R¹ is a monovalent hydrocarbon group of 1 to 10 carbon atoms; each R² is independently a monovalent hydrocarbon group of 1 to 10 carbon atoms which may be substituted with a glycidyloxy group; R³ is a monovalent aliphatic hydrocarbon group of 1 to 10 carbon atoms; a, b, c and d are numbers which satisfy the conditions a ≥ 0.5, b ≥ 0, c ≥ 0, d ≥ 0 and a+b+c+d = 1; and x and y are numbers which satisfy the conditions x ≥ 1.0 and y ≤ 0.5), and
(D) an effective curing amount of a curing agent.

2. The conductive silicone rubber composition of claim 1, wherein component (C) has a weight-average molecular weight of from 500 to 10,000.

3. The conductive silicone rubber composition of claim 1 or 2, wherein b, c and d in formula (1) are numbers which satisfy the conditions b = 0, 0 ≤ c ≤ 0.5 and 0 ≤ d ≤ 0.2.

4. A cured product of the conductive silicone rubber composition according to any one of claims 1 to 3.
